# EUROPEAN PATENT APPLICATION

(11) **EP 4 697 547 A1**
(43) Date of publication of application: **18.02.2026**
(21) Application number: 24788118.8
(22) Date of filing: 10.04.2024
(51) Int. Cl.: H02J 7/00

(54) **POWER SUPPLY SYSTEM FOR POWER AMPLIFIER MODULE, ELECTRONIC DEVICE, AND POWER SUPPLY METHOD**

(30) Priority: 10.04.2023 CN 202310375320
(71) Applicant: Vanchip (Tianjin) Technology Co. Ltd, Tianjin 300457 (CN)
(72) Inventor: GAO, Chenyang, Tianjin 300457 (CN); XU, Guanjian, Tianjin 300457 (CN); CHEN, Cheng, Tianjin 300457 (CN)
(74) Representative: Wang, Bo
(86) International application number: PCT/CN2024/087091
(87) International publication number: WO 2024/213016

(57) **Abstract**

Disclosed in the present invention are a power supply system for a power amplifier module, an electronic device, and a power supply method. The power supply system comprises a battery power supply, a first power converter, a second power converter, a low dropout linear regulator, a first switch, a second switch, a control circuit and a power amplifier unit. The battery power supply is used as a main power supply; a first voltage output by the first power converter and a second voltage output by the second power converter are respectively controlled by switching of the first switch and the second switch; one of the voltages is output to the power amplifier unit, together with an output voltage of the low dropout linear regulator, provides a direct current working state for the power amplifier unit, to achieve output of high-performance radio frequency power. Moreover, the control circuit generates a corresponding control signal according to an inputted system control signal to control the working state of each unit. In addition, the problem of electric leakage caused by voltage difference between power supply voltages, and the problem of current backflow and the phenomenon of ringing during switching are solved.

## Description

### BACKGROUND

### Technical Field

The present invention relates to a power supply system for a power amplifier module, also relates to an electronic device including the power supply system, a power supply method for a power amplifier module, and belongs to the technical field of radio frequency integrated circuits.

### Related Art

With the changing and rapid development of a mobile communications technology, especially with the large-scale application of a 5th-generation (5G) communication technology, increasingly higher requirements are put forward to the performance of a radio frequency front-end module in a mobile communication terminal, the adaptability and cost performance of an application solution, and the like. A power amplifier module (PAM) is an important component of the radio frequency front-end module. The function of the PAM in the radio frequency front-end module is to amplify modulated radio frequency signal power and output the modulated radio frequency signal power to an antenna end. The antenna transmits an amplified radio frequency signal.

The power amplifier module in the radio frequency front-end module is usually jointly powered by a battery power supply and a power management integrated chip (PMIC). The PMIC mainly includes a boost direct current power converter (DC-DC Boost) and a buck direct current power converter (DC-DC Buck). Usually, in an actual application, a voltage range of the battery power supply is 3.2 V to 5 V; a voltage range of the DC-DC Boost is 0.6 V to 5 V; and a voltage range of the DC-DC Buck is 0.6 V to 3.4 V. There are various situations of sizes and mutual relationships of the above three supply voltages based on a specific application configuration of the PAM. Therefore, designing a proper and efficient power supply system for the power amplifier module to satisfy the requirements on the adaptability and cost performance of the application solution and solving the problem of electric leakage caused by a voltage difference between different supply voltages and the problem such as current backflow that may occur during switching of different supply voltages are always a very important technical research topic in the art.

### SUMMARY

A first technical problem to be solved in the present invention is to provide a power supply system for a power amplifier module.

Another technical problem to be solved in the present invention is to provide an electronic device including the power supply system for the power amplifier module.

Still another technical problem to be solved in the present invention is to provide a power supply method for a power amplifier module.

To achieve the above objectives, the present invention uses the following technical solutions:
According to a first aspect of the embodiments of the present invention, a power supply system for a power amplifier module is provided, including a battery power supply, a first power converter, a second power converter, a low dropout linear regulator, a first switch, a second switch, a control circuit, and a power amplifier unit.

The battery power supply is used as a main power supply of the power supply system, and provides a supply voltage for the first power converter, the second power converter, the low dropout linear regulator, and the control circuit.

The first power converter uses a boost direct current power converter and is configured to: convert a battery voltage into a first voltage and output the first voltage to the first switch.

The second power converter uses a buck direct current power converter and is configured to: convert the battery voltage into a second voltage and output the second voltage to the second switch.

The control circuit outputs a corresponding control signal after performing logical operation and/or controlled conversion processing based on a system control signal, to respectively control working states of the first switch, the second switch, and the low dropout linear regulator.

The first switch and the second switch respectively switch turning on or turning off working states of the switches based on the corresponding control signal, and output one of the first voltage and the second voltage as a fourth voltage to the power amplifier unit.

The low dropout linear regulator converts, based on the corresponding control signal, the battery voltage into a fifth voltage and then outputs the fifth voltage to the power amplifier unit.

The power amplifier unit establishes a direct current working state by using the fourth voltage as a supply voltage and using the fifth voltage as a bias voltage, to achieve output of high-performance radio frequency power.

Preferably, an output end of the battery power supply is respectively connected to power input ends of the first power converter, the second power converter, the low dropout linear regulator, and the control circuit; and an output end of the first power converter is connected to a power input end of the first switch; an output end of the second power converter is connected to a power input end of the second switch; and output ends of both the first switch and the second switch are jointly connected to a supply voltage input end of the power amplifier unit after being connected to each other; an output end of the low dropout linear regulator is connected to a bias voltage input end of the power amplifier unit; and a control signal output end of the control circuit is respectively connected to corresponding control signal input ends of the low dropout linear regulator, the first switch, and the second switch.

Preferably, the power amplifier unit includes at least one power amplifier; each power amplifier connects the inputted fourth voltage as the supply voltage to a collector of a corresponding heterojunction bipolar transistor and connects the inputted fifth voltage as the bias voltage to a base of the corresponding heterojunction bipolar transistor, to establish a direct current working state of the power amplifier.

Preferably, a circuit structure of the first switch and a circuit structure of the second switch are the same, and output ends of the first switch and the second switch are connected to each other; the first voltage is input to a power end of the first switch, and a fourth enable signal is input to a control end; the second voltage is input to a power end of the second switch, and a fifth enable signal is input to a control end; the fourth enable signal and the fifth enable signal respectively control one of the first switch and the second switch to be turned on and control the other one of the first switch and the second switch to be turned off; and an input voltage of a closed circuit is output as a fourth voltage.

Preferably, the first switch includes a fifth N-channel metal oxide semiconductor (NMOS) transistor, a fifth P-channel metal oxide semiconductor (PMOS) transistor, a first resistor, a second resistor, and an eighth inverter.

A gate end of the fifth NMOS transistor is connected to a first output end of a current backflow prevention unit in the control circuit through the first resistor; a gate end of the fifth PMOS transistor is connected to an output end of the eighth inverter through the second resistor; an input end of the eighth inverter is connected to the first output end of the current backflow prevention unit in the control circuit; a power end of the eighth inverter is connected to an output end of a high-potential selection unit in the control circuit; a drain end of the fifth NMOS transistor and a source end of the fifth PMOS transistor are jointly connected to an output end of the first power converter after being connected to each other; a source end of the fifth NMOS transistor and a drain end of the fifth PMOS transistor are jointly connected to an output end of the first switch after being connected to each other; a body end of the fifth NMOS transistor is connected to a ground potential end; and a body end of the fifth PMOS transistor is connected to the output end of the high-potential selection unit in the control circuit.

Preferably, the control circuit includes a logical control unit, a high-potential selection unit, a level conversion unit, and a current backflow prevention unit.

The logical control unit is composed of a logical combination of gate circuits, and is configured to: after performing the logical operation processing based on the system control signal, generate a first enable signal to control a working state of the low dropout linear regulator, and generate a second enable signal and output the second enable signal to the level conversion unit;
The high-potential selection unit is configured to: perform comparative selection on the battery voltage and the first voltage, and output a voltage having a higher potential as a third voltage to the level conversion unit, the current backflow prevention unit, the first switch, and the second switch.

The level conversion unit is configured to: convert the second enable signal of a battery voltage domain into a third enable signal of a third voltage domain, and output the third enable signal to the current backflow prevention unit.

The current backflow prevention unit is configured to: generate, after performing logical operation and delaying processing based on the third enable signal, the fourth enable signal and the fifth enable signal of the third voltage domain to respectively control the working states of the first switch and the second switch.

Preferably, for the logical control unit, a control signal input end is connected to a system control signal input end; a power input end is connected to an output end of the battery power supply; a first output end is connected to a control signal input end of the low dropout linear regulator; and a second output end is connected to a control signal input end of the level conversion unit.

For the high-potential selection unit, an input end is respectively connected to the output end of the battery power supply and an output end of the first power converter, and an output end is respectively connected to the current backflow prevention unit, the level conversion unit, the first switch, and the second switch.

For the level conversion unit, the control signal input end is connected to a second output end of the logical control unit; a power input end is connected to an output end of the high-potential selection unit; and an output end is connected to a control signal input end of the current backflow prevention unit.

For the current backflow prevention unit, the control signal input end is connected to an output end of the level conversion unit; a power input end is connected to an output end of the high-potential selection unit; a first output end is connected to a control signal input end of the first switch; and a second output end is connected to a control signal input end of the second switch.

Preferably, the high-potential selection unit includes a first PMOS transistor, a second PMOS transistor, a first Schottky diode, and a second Schottky diode.

A source end of the first PMOS transistor is connected to an output end of the battery power supply; a gate end of the first PMOS transistor is connected to an output end of the first power converter; a source end of the second PMOS transistor is connected to the output end of the first power converter; a gate end of the second PMOS transistor is connected to the output end of the battery power supply; a body end of the first PMOS transistor is short-circuited to a drain end, and a body end of the second PMOS transistor is short-circuited to a drain end; the two body ends are jointly connected to an output end of the high-potential selection unit; a positive electrode of the first Schottky diode is connected to the source end of the first PMOS transistor; a positive electrode of the second Schottky diode is connected to the source end of the second PMOS transistor; and negative electrodes of both the first Schottky diode and the second Schottky diode are connected to the output end of the high-potential selection unit.

Preferably, when the battery voltage is greater than the first voltage and a difference between the battery voltage and the first voltage is greater than or equal to a threshold voltage of the first PMOS transistor, the first PMOS transistor is turned on, and the battery voltage is output to the output end of the high-potential selection unit through the first PMOS transistor.

When the battery voltage is greater than the first voltage and a difference between the battery voltage and the first voltage is less than the threshold voltage of the first PMOS transistor, the first Schottky diode is turned on, and the battery voltage is output to the output end of the high-potential selection unit through the first Schottky diode.

The third voltage output by the high-potential selection unit is the battery voltage.

Preferably, when the first voltage is greater than the battery voltage and a difference between the first voltage and the battery voltage is greater than or equal to a threshold voltage of the second PMOS transistor, the second PMOS transistor is turned on, and the first voltage is output to the output end of the high-potential selection unit through the second PMOS transistor.

When the first voltage is greater than the battery voltage and a difference between the first voltage and the battery voltage is less than the threshold voltage of the second PMOS transistor, the second Schottky diode is turned on, and the first voltage is output to the output end of the high-potential selection unit through the second Schottky diode.

The third voltage output by the high-potential selection unit is the first voltage.

Preferably, when the battery voltage is equal to the first voltage, both the first Schottky diode and the second Schottky diode are turned on, and the first voltage and the battery voltage are respectively output to the output end of the high-potential selection unit through the first Schottky diode and the second Schottky diode; and the third voltage output by the high-potential selection unit is the same as both the first voltage and the battery voltage.

Preferably, the level conversion unit includes a third PMOS transistor, a fourth PMOS transistor, a third NMOS transistor, and a fourth NMOS transistor.

The third PMOS transistor and the third NMOS transistor form a first-stage inverter, and the fourth PMOS transistor and the fourth NMOS transistor form a second-stage inverter; and the first-stage inverter and the second-stage inverter are cascaded in sequence.

Preferably, a gate end of the third PMOS transistor and a gate end of the third NMOS transistor are connected as an input end of the level conversion unit to a second output end of the logical control unit after being connected to each other; a source end of the third PMOS transistor is short-circuited to a body end, and a source end of the fourth PMOS transistor is short-circuited to a body end; the two source ends are connected to the output end of the high-potential selection unit; a source end of the third NMOS transistor is short-circuited to a body end, and a source end of the fourth NMOS transistor is short-circuited to a body end; the two source ends are connected to a ground potential end; and a drain end of the fourth PMOS transistor and a drain end of the fourth NMOS transistor are jointly connected to the output end of the level conversion unit after being connected to each other.

Preferably, the level conversion unit uses the third voltage as the supply voltage; and a voltage domain of the inputted second enable signal and a voltage domain of the output third enable signal are different, but logical states of the second enable signal and the third enable signal are the same.

Preferably, the current backflow prevention unit includes a first inverter, a first NAND gate, a second NAND gate, a first delay module, and a second delay module, as well as a first inverter group and a second inverter group.

Each of the first inverter group and the second inverter group is formed by connecting the same odd number of inverters in series in sequence.

Power ends of all elements are connected to an output end of the high-potential selection unit.

Preferably, in the current backflow prevention unit, an input end of the first inverter and a first input end of the first NAND gate are both connected to an output end of the level conversion unit; an output end of the first inverter is connected to a first input end of the second NAND gate; an output end of the first NAND gate is connected to an input end of the first delay module; an output end of the first delay module is connected to both a second input end of the second NAND gate and an input end of the first inverter group; an output end of the first inverter group is connected to a first output end of the current backflow prevention unit; an output end of the second NAND gate is connected to an input end of the second delay module; an output end of the second delay module is connected to both a second input end of the first NAND gate and an input end of the second inverter group; and an output end of the second inverter group is connected to a second output end of the current backflow prevention unit.

Preferably, in the current backflow prevention unit, when the inputted third enable signal undergoes level state transition, the output fourth enable signal and the output fifth enable signal change undergo level state transition along with the level state transition, and a delay time interval exists between times of the level state transitions of the fourth enable signal and the fifth enable signal.

According to a second aspect of the embodiments of the present invention, an electronic device is provided, including the power supply system for the power amplifier module.

According to a third aspect of the embodiments of the present invention, a power supply method for a power amplifier module is provided, including the following steps:
respectively supplying power to a first power converter, a second power converter, a low dropout linear regulator, and a control circuit by using a battery power supply;
generating and outputting, by the first power converter, a first voltage to a first switch, and generating and outputting, by the second power converter, a second voltage to a second switch;
generating, by the control circuit, a first enable signal, a fourth enable signal, and a fifth enable signal after performing logical operation and/or controlled conversion processing based on a system control signal;
controlling a working state of the low dropout linear regulator by using the first enable signal; when the low dropout linear regulator is enabled, generating and outputting, by the low dropout linear regulator, a fifth voltage to a power amplifier unit;
controlling a working state of the first switch by using the fourth enable signal, controlling a working state of the second switch by using the fifth enable signal, turning on one of the switches, turning off the other switch, and outputting the first voltage or the second voltage of a closed circuit as a fourth voltage to the power amplifier unit; and
establishing, by the power amplifier unit, a direct current working state by using the fourth voltage as a supply voltage and using the fifth voltage as a bias voltage, to achieve output of high-performance radio frequency power.

Preferably, by the control circuit performs comparative selection on the battery voltage and the first voltage, and uses a voltage having a higher potential as a third voltage.

The control circuit further generates a second enable signal after performing the logical operation and/or controlled conversion processing based on the system control signal.

The second enable signal of a battery voltage domain is converted into a third enable signal of a third voltage domain by using the third voltage.

The fourth enable signal and the fifth enable signal is generated after performing logical operation and delaying processing on the third enable signal.

The bias voltage is respectively provided to body ends of PMOS switch transistors in the first switch and the second switch by using the third voltage.

Preferably, when the third enable signal undergoes level state transition, a delay time interval exists between times at which the fourth enable signal and the fifth enable signal change undergo level state transition along with the level state transition.

Compared with the existing art, the power supply system for the power amplifier module that is provided by the present invention uses the battery voltage as the main power. The first voltage output by the first power converter and the second voltage output by the second power converter are respectively controlled by switching of the first switch and the second switch. One voltage is output as the fourth voltage to the power amplifier unit to provide a supply voltage to the power amplifier unit. The fifth voltage output by the low dropout linear regulator provides the bias voltage to the power amplifier unit. The control circuit outputs the corresponding control signal to respectively control the working states of the first switch, the second switch, and the low dropout linear regulator. The fourth voltage and the fifth voltage jointly provide a direct current working state to the power amplifier unit, so that the power amplifier module outputs the high-performance radio frequency power to meet requirements on adaptability and cost performance of an application solution. In addition, by using the technical solutions of the logical control unit, the high-potential selection unit, the level conversion unit, and the current backflow prevention unit, the control circuit solves the problem of electric leakage caused by a voltage difference between different supply voltages and the problem of current backflow a ringing phenomenon that occur during switching, while completing switching and control on the power supply system. Therefore, the power supply system for the power amplifier module that is provided in the present invention has beneficial effects such as an ingenious and proper structural design, flexibility, high working efficiency, and excellent circuit performance.

### BRIEF DESCRIPTION OF THE DRAWINGS

FIG. 1 is a schematic structural diagram of a power supply system for a power amplifier module according to the present invention;
FIG. 2 is a schematic structural diagram of a control circuit in an embodiment of the present invention;
FIG. 3 is a schematic circuit diagram of a high-potential selection unit in an embodiment of the present invention;
FIG. 4 is a schematic circuit diagram of a level conversion unit in an embodiment of the present invention;
FIG. 5 is a schematic circuit diagram of a current backflow prevention unit in an embodiment of the present invention;
FIG. 6 is a schematic circuit diagram of a first switch in an embodiment of the present invention;
FIG. 7 is a schematic circuit diagram of a second switch in an embodiment of the present invention;
FIG. 8 is a schematic diagram of an electronic device using a power supply system for a power amplifier module provided in the present invention;
FIG. 9 is a first flowchart of a power supply method for a power amplifier module in an embodiment of the present invention; and
FIG. 10 is a second flowchart of a power supply method for a power amplifier module in an embodiment of the present invention.

### DETAILED DESCRIPTION

Technical content of the present invention will be described in detail below with reference to the accompanying drawings and specific embodiments.

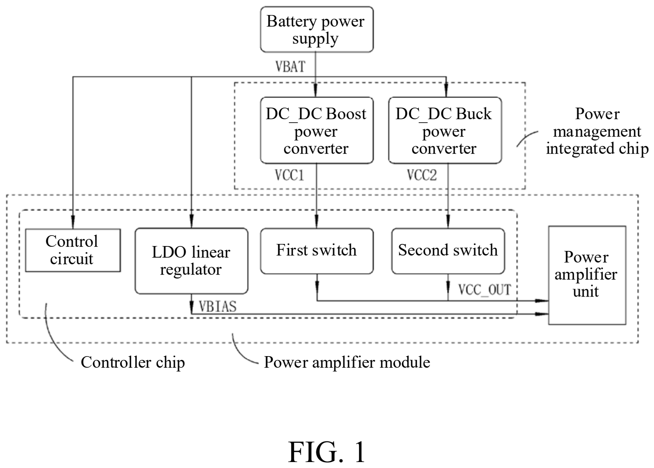

As shown in FIG. 1, a power supply system for a power amplifier module that is provided in the present invention includes a battery power supply, a first power converter, a second power converter, a low dropout linear regulator (LDO), a first switch, a second switch, a control circuit, and a power amplifier unit. The first power converter uses a boost direct current power converter (DC-DC Boost). The second power converter uses a buck direct current power converter (DC-DC Buck). The first power converter and the second power converter form a power management integrated chip (PMIC). T low dropout linear regulator (LDO), the first switch, the second switch, and the control circuit form a controller chip. The controller chip and the power amplifier unit form the power amplifier module.

In the power supply system for the power amplifier module that is provided in the present invention, an output end of the battery power supply is respectively connected to power input ends of the first power converter, the second power converter, the low dropout linear regulator, and the control circuit; and an output end of the first power converter is connected to a power input end of the first switch; an output end of the second power converter is connected to a power input end of the second switch; and output ends of both the first switch and the second switch are jointly connected to a supply voltage input end of the power amplifier unit after being connected to each other; an output end of the low dropout linear regulator is connected to a bias voltage input end of the power amplifier unit; and a control signal output end of the control circuit is respectively connected to corresponding control signal input ends of the low dropout linear regulator, the first switch, and the second switch.

An output voltage VBAT provided by the battery power supply is main power of the power supply system. A voltage range of the output voltage VBAT is usually 3.2 V to 5 V, and provides a supply voltage to the power management integrated chip and the power amplifier module.

The first power converter converts an input battery voltage VBAT into a first voltage VCC1 and outputs the first voltage VCC1 to the first switch. A voltage range of the first voltage VCC1 output by the first power converter is usually 0.6 V to 5 V. The second power converter converts the inputted battery voltage VBAT into a second voltage VCC2 and outputs the second voltage VCC2 to the second switch. A voltage range of the second voltage VCC2 output by the second power converter is usually 0.6 V to 3.4 V.

The first switch and the second switch respectively switch turning on or turning off working states of the switches based on the corresponding control signal provided by the control circuit, and output one of the inputted first voltage VCC1 and the inputted second voltage VCC2 as a fourth voltage VCC_OUT to the power amplifier unit, to provide the supply voltage to the power amplifier unit.

The low dropout linear regulator converts an input battery voltage VBAT into a fifth voltage VBIAS and outputs the fifth voltage VBIAS to the power amplifier unit, to provide a bias voltage to the power amplifier unit.

The control circuit outputs a corresponding control signal after performing logical operation and/or controlled conversion processing based on an inputted system control signal, to respectively control working states of the first switch, the second switch, and the low dropout linear regulator.

The power amplifier unit includes at least one power amplifier. Each power amplifier connects the inputted fourth voltage VCC_OUT as the supply voltage to a collector of a corresponding heterojunction bipolar transistor (HBT) and connects the inputted fifth voltage as the bias voltage to a base of the corresponding heterojunction bipolar transistor (HBT), so that the fourth voltage VCC_OUT and the fifth voltage VBIAS jointly provide a direct current working state for the power amplifier, and the power amplifier module outputs high-performance radio frequency power to meet requirements on adaptability and price/performance of an application solution.

Circuit structures and working principles of units are respectively described in detail below.

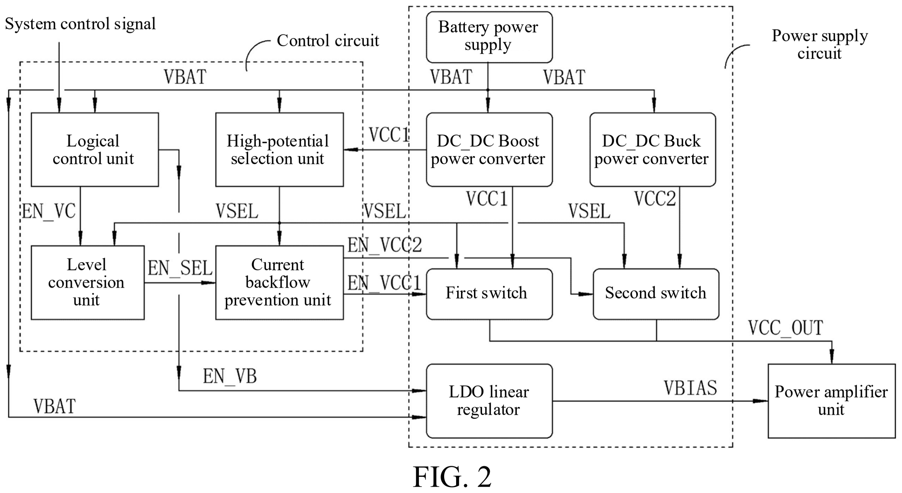

As shown in FIG. 2, in one embodiment of the present invention, the control circuit includes a logical control unit, a high-potential selection unit, a level conversion unit, and a current backflow prevention unit. Where:
For the logical control unit, a control signal input end is connected to a system control signal input end; a power input end is connected to an output end of the battery power supply; a first output end is connected to a control signal input end of the low dropout linear regulator; and a second output end is connected to a control signal input end of the level conversion unit. The logical control unit is composed of a logical combination of gate circuits based on an actual application requirement, and is configured to: after performing the logical operation processing based on the inputted system control signal, generate a first enable signal EN_VB to control a working state of the low dropout linear regulator, and generate a second enable signal and output the second enable signal EN_VC to the level conversion unit. The first enable signal EN_VB and the second enable signal EN_VC are both level signals in a VBAT voltage domain.

For the high-potential selection unit, a corresponding input end is respectively connected to the output end of the battery power supply and an output end of the first power converter, and an output end is respectively connected to corresponding input ends of the current backflow prevention unit, the level conversion unit, the first switch, and the second switch. The high-potential selection unit is configured to: perform comparative selection on the battery voltage VBAT and the first voltage VCC1, and output a voltage having a higher potential as a third voltage VSEL to the level conversion unit, the current backflow prevention unit, the first switch, and the second switch.

For the level conversion unit, the control signal input end is connected to a second output end of the logical control unit; a power input end is connected to an output end of the high-potential selection unit; and an output end is connected to a control signal input end of the current backflow prevention unit. The level conversion unit is configured to: convert the second enable signal EN_VC of a battery voltage VBAT domain into a third enable signal EN_SEL of a third voltage VSEL domain, and output the third enable signal to the current backflow prevention unit.

For the current backflow prevention unit, the control signal input end is connected to an output end of the level conversion unit; a power input end is connected to an output end of the high-potential selection unit; a first output end is connected to a control signal input end of the first switch; and a second output end is connected to a control signal input end of the second switch. The current backflow prevention unit is configured to: generate, after performing logical operation and delaying processing based on the inputted third enable signal EN_SEL, the fourth enable signal EN_VCC1 and the fifth enable signal EN_VCC2 of the third voltage VSEL domain to respectively control the working states of the first switch and the second switch.

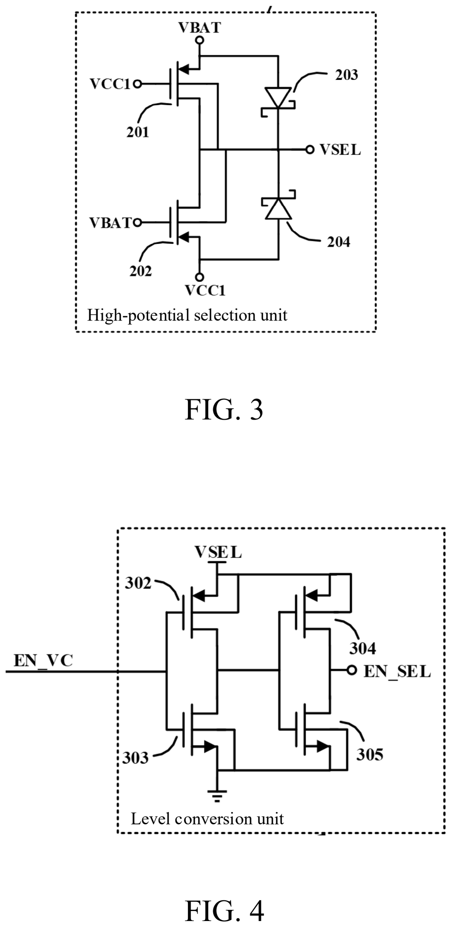

In one embodiment of the present invention, as shown in FIG. 3, the high-potential selection unit includes a first PMOS transistor 201, a second PMOS transistor 202, a first Schottky diode 203, and a second Schottky diode 204. A source end of the first PMOS transistor 201 is connected to an output end of the battery power supply; a gate end of the first PMOS transistor 201 is connected to an output end of the first power converter; a source end of the second PMOS transistor 202 is connected to the output end of the first power converter; a gate end of the second PMOS transistor 202 is connected to the output end of the battery power supply; a body end of the first PMOS transistor 201 is short-circuited to a drain end, and a body end of the second PMOS transistor 202 is short-circuited to a drain end; the two body ends are jointly connected to an output end of the high-potential selection unit; a positive electrode of the first Schottky diode 203 is connected to the source end of the first PMOS transistor 201; a positive electrode of the second Schottky diode 204 is connected to the source end of the second PMOS transistor 202; and negative electrodes of both the first Schottky diode 203 and the second Schottky diode 204 are connected to the output end of the high-potential selection unit.

A working principle of the high-potential selection unit is as follows: Vgs_TH is a threshold voltage of the first PMOS transistor 201 and the second PMOS transistor 202. A barrier layer of a Schottky diode is thin, so that its a threshold voltage is low. Both the PMOS transistors and the Schottky diodes have very small turn-on voltage drops, so that their turn-on voltage drops are not considered in the following analysis.

When the battery voltage VBAT is greater than the first voltage VCC1, and VBAT-VCC1 is greater than or equal to Vgs_TH, the first PMOS transistor 201 is turned on, the second PMOS transistor 202 is turned off, and both the first Schottky diode 203 and the second Schottky diode 204 are in a turned-off state. In this case, the battery voltage VBAT is output to the output end of the high-potential selection unit through the first PMOS transistor 201, that is, the battery voltage VBAT having a higher potential is output as the third voltage VSEL.

When the battery voltage VBAT is greater than the first voltage VCC1, and VBAT-VCC1 is less than Vgs_TH, the first PMOS transistor 201, the second PMOS transistor 202, and the second Schottky diode 204 are all turned off, and the first Schottky diode 203 is turned on. In this case, the battery voltage VBAT is output to the output end of the high-potential selection unit through the first Schottky diode 203, that is, the battery voltage VBAT having a higher potential is output as the third voltage VSEL.

When the first voltage VCC1 is greater than the battery voltage VBAT, and VCC1-VBAT is greater than or equal to Vgs_TH, the second PMOS transistor 202 is turned on, the first PMOS transistor 201 is turned off, and both the first Schottky diode 203 and the second Schottky diode 204 are turned off. In this case, the first voltage VCC1 is output to the output end of the high-potential selection unit through the second PMOS transistor 202, that is, the first voltage VCC1 having a higher potential is output as the third voltage VSEL.

When the first voltage VCC1 is greater than the battery voltage VBAT, and VCC1-VBAT is less than Vgs_TH, the first PMOS transistor 201, the second PMOS transistor 202, and the first Schottky diode 203 are all turned off, and the second Schottky diode 204 is turned on. In this case, the first voltage VCC1 is output to the output end of the high-potential selection unit through the second Schottky diode 204, that is, the first voltage VCC1 having a higher potential is output as the third voltage VSEL.

When the battery voltage VBAT is equal to the first voltage VCC1, both the first PMOS transistor 201 and the second PMOS transistor 202 are turned off, and both the first Schottky diode 203 and the second Schottky diode 204 are in a turned-on state. In this case, the battery voltage VBAT and the first voltage VCC1 that have equal potentials are both output as the third voltage VSEL.

In conclusion, the high-potential selection unit performs the comparative selection on the battery voltage VBAT and the first voltage VCC1 by using the two PMOS transistors and the two Schottky diodes, and outputs a voltage having a higher potential as the third voltage VSEL to the current backflow prevention unit, the level conversion unit, the first switch, and the second switch.

In one embodiment of the present invention, as shown in FIG. 4, the level conversion unit includes a third PMOS transistor 302, a fourth PMOS transistor 304, a third NMOS transistor 303, and a fourth NMOS transistor 305. A gate end of the third PMOS transistor 302 and a gate end of the third NMOS transistor 303 are both connected to a second output end of the logical control unit. A source end and body end of the third PMOS transistor 302 are jointly connected to an output end of the high-potential selection unit after being short-circuited, while a source end and body end of the third NMOS transistor 303 are jointly connected to a ground potential end after being short-circuited. A drain end of the third PMOS transistor 302 and a drain end of the third NMOS transistor 303 are jointly connected to a gate end of the fourth PMOS transistor 304 and a gate end of the fourth NMOS transistor 305 after being connected. The source end and body end of the fourth PMOS transistor 304 are jointly connected to the output end of the high-potential selection unit after being short-circuited, while the source end and body end of the fourth NMOS transistor 305 are jointly connected to the ground potential end after being short-circuited. The drain end of the fourth PMOS transistor 304 and the drain end of the fourth NMOS transistor 305 are jointly connected to an output end of the level conversion unit after being connected.

In the level conversion unit, the third PMOS transistor 302 and the third NMOS transistor 303 form a first-stage inverter, and the fourth PMOS transistor 304 and the fourth NMOS transistor 305 form a second-stage inverter. The first-stage inverter and the second-stage inverter are cascaded in sequence to form the level conversion unit. The level conversion unit uses the third voltage VSEL as the supply voltage, converts the second enable signal EN_VC of the battery voltage VBAT domain into the third enable signal EN_SEL of the third voltage VSEL domain, and outputs the third enable signal EN_SEL. The level conversion unit changes only a voltage domain corresponding to a high level of an enable signal, instead of changing a logical state of the enable signal.

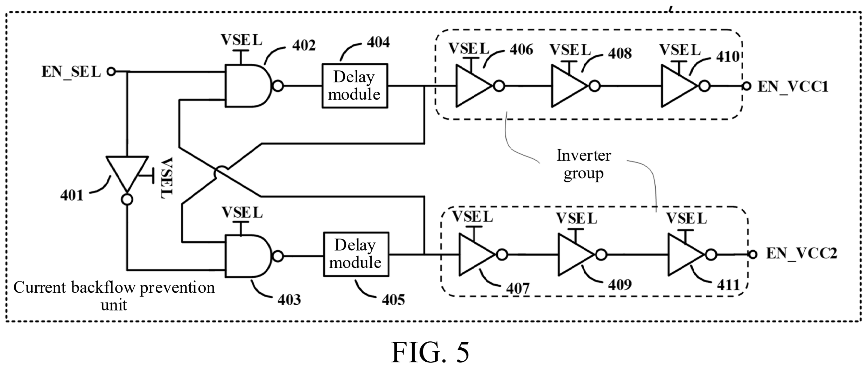

In one embodiment of the present invention, as shown in FIG. 5, the current backflow prevention unit includes a first inverter 401, a first NAND gate 402, a second NAND gate 403, a first delay module 404, and a second delay module 405, as well as a first inverter group and a second inverter group. Each of the first inverter group and the second inverter group is formed by connecting the same odd number of inverters in series in sequence. In this embodiment of the present invention, as shown in FIG. 5, the first inverter group is formed by connecting a second inverter 406, a fourth inverter 408, and a sixth inverter 410 in series in sequence, and the second inverter group is formed by connecting a third inverter 407, a fifth inverter 409, and a seventh inverter 411 in series in sequence.

In the current backflow prevention unit, power ends of all elements such as the inverters and the NAND gates are connected to an output end of the high-potential selection unit. An input end of the first inverter 401 and a first input end of the first NAND gate 402 are both connected to an output end of the level conversion unit; an output end of the first inverter 401 is connected to a first input end of the second NAND gate 403; an output end of the first NAND gate 402 is connected to an input end of the first delay module 404; an output end of the first delay module 404 is connected to both a second input end of the second NAND gate 403 and an input end of the first inverter group; an output end of the first inverter group is connected to a first output end of the current backflow prevention unit; an output end of the second NAND gate 403 is connected to an input end of the second delay module 405; an output end of the second delay module 405 is connected to both a second input end of the first NAND gate 402 and an input end of the second inverter group; and an output end of the second inverter group is connected to a second output end of the current backflow prevention unit.

In the current backflow prevention unit, it is assumed that delay time of the first delay module 404 is Δt1, and delay time of the second delay module 405 is Δt2. It is first assumed that Δt1 is less than Δt2. When the inputted third enable signal EN_SEL transitions from a low level to a high level:
in a first aspect, if the first input end of the first NAND gate 402 is at a high level and the second input end is at a low level, the output end of the first NAND gate 402 is at a high level. After the delay time Δt1 of the first delay module 404, the fourth enable signal EN_VCC1 at a low level is output at the first output end of the current backflow prevention unit through the first inverter group, and the second input end of the second NAND gate 403 is at a high level.

In a second aspect, after the third enable signal EN_SEL passes through the first inverter 401, the first input end of the second NAND gate 403 is at a low level, and the output end of the second NAND gate 403 is at a high level (after the time Δt1, the second input end is at a high level which does not affect the state of the output end). After the delay time Δt2 of the second delay module 405, in one aspect, the fifth enable signal EN_VCC2 at a low level is output at the second output end of the current backflow prevention unit through the second inverter group; and on the other hand, the second input end of the first NAND gate 402 is at a high level. In this case, the output end of the first NAND gate 402 changes to a low level. After the delay time Δt1 of the first delay module 404, on the one hand, the fourth enable signal EN_VCC1 at a high level is output at the first output end of the current backflow prevention unit through the first inverter group (delay time in this case is Δt1 + Δt2 in total). On the other hand, the second input end of the second NAND gate 403 is at a low level, and the low level does not affect an output state of the second NAND gate 403. The output end of the current backflow prevention unit is in a stable state until the third enable signal EN_SEL undergoes level state transition again.

In conclusion, in the current backflow prevention unit, when the inputted third enable signal EN_SEL transitions from a low level to a high level, assuming that Δt1 is less than Δt2, the fourth enable signal EN_VCC1 transitions from a low level to a high level after the time Δt1 + Δt2, and the fifth enable signal EN_VCC2 transitions from a high level to a low level after the time Δt2. There is an interval of one delay time Δt1 between the transition times of the two enable signals. Assuming that Δt2 is less than Δt1, a transition time interval between the two enable signals is Δt1-Δt2. That is, there is a delay interval between the level state transition times of the fourth enable signal EN_VCC1 and the fifth enable signal EN_VCC2, and the fourth enable signal EN_VCC1 and the fifth enable signal EN_VCC2 may not be at a high level at the same time, so as to ensure that the first switch and the second switch that are controlled by the fourth enable signal EN_VCC1 and the fifth enable signal EN_VCC2 are not turned on at the same time, thereby solving a problem of current backflow occurring during supply voltage switching. A case in which the inputted third enable signal EN_SEL transitions from a high level to a low level is similar to the above principle, so details will not be elaborated here.

It should be noted that a value of the delay time interval may be adjusted and set by using the delay times of the first delay module 404 and the second delay module 405. The delay modules may be implemented by using a resistance-capacitance (RC) low-pass filter network, or may be implemented by using an inverter or another delay circuit. A quantity of inverters in the first inverter group and a quantity of inverters in the second inverter group may be determined based on a size of a switch transistor in the first switch and a size of a switch transistor in the second switch, and an odd number of, such as one or three or five, inverters may be used.

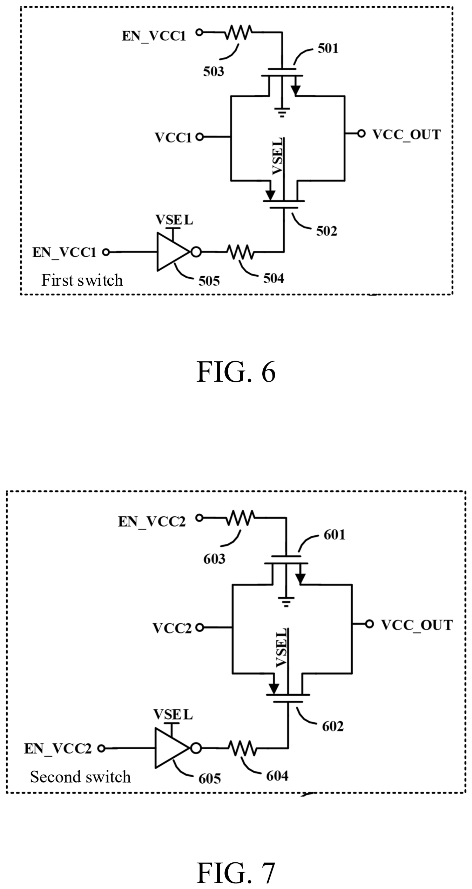

In one embodiment of the present invention, as shown in FIG. 6, the first switch includes a fifth NMOS transistor 501, a fifth PMOS transistor 502, a first resistor 503, a second resistor 504, and an eighth inverter 505. A gate end of the fifth NMOS transistor 501 is connected to the first output end of the current backflow prevention unit through the first resistor 503; a gate end of the fifth PMOS transistor 502 is connected to an output end of the eighth inverter 505 through the second resistor 504; an input end of the eighth inverter 505 is connected to the first output end of the current backflow prevention unit; and a power end of the eighth inverter 505 is connected to the output end of the high-potential selection unit. A drain end of the fifth NMOS transistor 501 and a source end of the fifth PMOS transistor 502 are jointly connected to an output end of the first power converter after being connected to each other. A source end of the fifth NMOS transistor 501 and a drain end of the fifth PMOS transistor 502 are jointly connected to an output end of the first switch after being connected to each other. A body end of the fifth NMOS transistor 501 is connected to a ground potential end; and a body end of the fifth PMOS transistor 502 is connected to the output end of the high-potential selection unit.

In the first switch, when the inputted fourth enable signal EN_VCC1 is at a high level, the high-level signal reaches the gate end of the fifth NMOS transistor 501 through the first resistor 503, so that the fifth NMOS transistor 501 is turned on. Furthermore, after the high-level signal transitions into a low-level signal through the eighth inverter 505, the low-level signal reaches the gate end of the fifth PMOS transistor 502 through the second resistor 504, so that the fifth PMOS transistor 502 is also turned on. In this case, the first switch is in a turned-on state. Therefore, through the first switch, the first voltage VCC1 output by the first power converter is output as a fourth voltage VCC_OUT to the power amplifier unit from the output end of the first switch, to provide the supply voltage to the power amplifier unit.

When the inputted fourth enable signal EN_VCC1 is at a low level, the low-level signal reaches the gate end of the fifth NMOS transistor 501 through the first resistor 503, so that the fifth NMOS transistor 501 is turned off. After the low-level signal transitions into a high-level signal through the eighth inverter 505, the high-level signal reaches the gate end of the fifth PMOS transistor 502 through the second resistor 504, so that the fifth PMOS transistor 502 is also turned off. In this case, the first switch is in a turned-off state. Therefore, the first voltage VCC1 output by the first power converter is cut off by the first switch.

A first switch provided in this embodiment of the present invention further has an anti-leakage function and a function of preventing a ringing phenomenon occurring during voltage switching. A working principle of the first switch is described in detail below.

In the existing art, for the fifth PMOS transistor 502 used as a switch transistor, a control signal of the gate end is a level signal of the battery voltage VBAT domain; the body end (an N-well) is connected to a battery voltage VBAT end; and the source end is connected to a first voltage VCC1 end. Due to a voltage difference between the first voltage VCC1 and the battery voltage VBAT, when the first voltage VCC1 is greater than the battery voltage VBAT, and VC1-VBAT is greater than or equal to Vgs_TH (which is the threshold voltage of the PMOS transistor), a PN junction between the source end (P+) and the body end (N+) of the fifth PMOS transistor 502 may be abnormally turned on. In addition, when the fifth PMOS transistor 502 is turned off, a voltage difference between the gate end and the source end may cause a channel of the PMOS transistor to be abnormally turned on. Such abnormal turning on generates a leakage current, which causes a waste of electric energy of the battery power supply, reduces the efficiency of the electric energy, and further leads to shortening of endurance of a mobile communication terminal.

In the first switch provided in this embodiment of the present invention, for the fifth PMOS transistor 502 used as a switch transistor, a control signal of the gate end is the fourth enable signal EN_VCC1, and the level of the signal is in a third voltage VSEL domain; the body end (an N-well) is connected to a third voltage VSEL end; and the source end is connected to a first voltage VCC1 end. Since the third voltage VSEL is a voltage having a higher potential in the battery voltage VBAT and the first voltage VCC1, no voltage difference that is equal to a threshold voltage may exist between the potentials of the ends, so that the problem of electric leakage is fundamentally solved.

In the first switch provided in this embodiment of the present invention, the first resistor 503 connected in series to the gate end of the fifth NMOS transistor 501 used as a switch transistor and the second resistor 504 connected in series to the gate end of the fifth PMOS transistor 502 used as a switch transistor can implement potential changes smoothly rather than instantly when a control voltage (the fourth enable signal EN_VCC1) at the gate ends of the switch transistors undergoes transition. In this way, the potential transitions in a switching process of turning on and turning off of the switch transistors can be smooth and slow, thereby avoiding the ringing phenomenon of the fourth voltage VCC_OUT at the output end.

In one embodiment of the present invention, as shown in FIG. 7, the second switch includes a sixth NMOS transistor 601, a sixth PMOS transistor 602, a third resistor 603, a fourth resistor 604, and a ninth inverter 605. A circuit structure of the second switch is completely the same as the circuit structure of the first switch, and a difference lies in that input control signals and input supply voltages of the two switch transistors are different from those of the first switch. A specific case is described as follows:
In the second switch, a gate end of the sixth NMOS transistor 601 is connected to the second output end of the current backflow prevention unit through the third resistor 603; a gate end of the sixth PMOS transistor 602 is connected to an output end of the ninth inverter 605 through the fourth resistor 604; an input end of the ninth inverter 605 is connected to the second output end of the current backflow prevention unit; and a power end of the ninth inverter 605 is connected to the output end of the high-potential selection unit. A drain end of the sixth NMOS transistor 601 and a source end of the sixth PMOS transistor 602 are jointly connected to an output end of the second power converter after being connected to each other. A source end of the sixth NMOS transistor 601 and a drain end of the sixth PMOS transistor 602 are jointly connected to an output end of the second switch after being connected to each other. A body end of the sixth NMOS transistor 601 is connected to a ground potential end; and a body end of the sixth PMOS transistor 602 is connected to the output end of the high-potential selection unit.

In the second switch, when the inputted fifth enable signal EN_VCC2 is at a high level, the high-level signal reaches the gate end of the sixth NMOS transistor 601 through the third resistor 603, so that the sixth NMOS transistor 601 is turned on. Furthermore, after the high-level signal transitions into a low-level signal through the ninth inverter 605, the low-level signal reaches the gate end of the sixth PMOS transistor 602 through the fourth resistor 604, so that the sixth PMOS transistor 602 is also turned on. In this case, the second switch is in a turned-on state. Therefore, through the second switch, the second voltage VCC2 output by the second power converter is output as a fourth voltage VCC_OUT to the power amplifier unit from the output end of the second switch, to provide the supply voltage to the power amplifier unit.

When the inputted fifth enable signal EN_VCC2 is at a low level, the low-level signal reaches the gate end of the sixth NMOS transistor 601 through the third resistor 603, so that the sixth NMOS transistor 601 is turned off. After the low-level signal transitions into a high-level signal through the ninth inverter 605, the high-level signal reaches the gate end of the sixth PMOS transistor 602 through the fourth resistor 604, so that the sixth PMOS transistor 602 is also turned off. In this case, the second switch is in a turned-off state. Therefore, the second voltage VCC2 output by the second power converter is cut off by the second switch.

The leakage function and the function of preventing a ringing phenomenon occurring during voltage switching of a second switch provided in this embodiment of the present invention are the same as those of the above first switch, so details will not be elaborated here.

The above describes in detail the circuit structures and working principles of the functional units of the power supply system for the power amplifier module that is provided in the embodiments of the present invention. In conclusion, the power supply system supplies the battery voltage VBAT as the main power to the first power converter, the second power converter, the low dropout linear regulator, and the control circuit respectively. The first voltage VCC1 output by the first power converter and the second voltage VCC2 output by the second power converter are respectively controlled by switching of the first switch and the second switch, and one voltage is output as the fourth voltage VCC_OUT to the power amplifier unit, thus providing the supply voltage to the power amplifier unit. The fifth voltage VBIAS output by the low dropout linear regulator provides the bias voltage to the power amplifier unit. The control circuit outputs the corresponding control signal after performing the logical operation and/or controlled conversion processing based on the inputted system control signal, to respectively control the working states of the first switch, the second switch, and the low dropout linear regulator.

In the control circuit, the high-potential selection unit performs the comparative selection on the battery voltage VBAT and the first voltage VCC1, and uses one voltage having a higher potential as the third voltage VSEL. The third voltage VSEL is output as the supply voltage to the level conversion unit and the current backflow prevention unit and is then output as the bias voltage to the body ends (the N-wells) of the PMOS transistors in the first switch and the second switch, thus solving the problem of electric leakage caused by the voltage difference. The first enable signal EN_VB output by the logical control unit is configured to control the working state of the low dropout linear regulator, and the output second enable signal EN_VC of the voltage VBAT domain is converted into the third enable signal EN_SEL of the third voltage VSEL domain through the level conversion unit, and the third enable signal EN_SEL is output to the current backflow prevention unit. After performing the logical operation and delaying processing based on the inputted third enable signal EN_SEL, the current backflow prevention unit generates the fourth enable signal EN_VCC1 and the fifth enable signal EN_VCC2 of the third voltage VSEL domain to respectively control the working states of the first switch and the second switch, and meanwhile, the problem of current backflow that may occur during the supply voltage switching is solved. In addition, in the first switch and the second switch, by using the technical solution in which one resistor is connected in series to the gate end of each switch transistor (each of the NMOS transistor and the PMOS transistor), the potential transition in the switching process of turning on and turning off of the switch transistors becomes smooth and slow, thereby avoiding the ringing phenomenon of the fourth voltage VCC_OUT at the output end.

By the cooperative work of the power supply circuit and the control circuit, the power supply system finally provides the direct current working state to the power amplifier unit joint by the fourth voltage VCC_OUT and the fifth voltage VBIAS, so that the power amplifier module outputs the high-performance radio frequency power to meet requirements on adaptability and cost performance of an application solution.

The power supply system for the power amplifier module that is provided in the present invention may be used as an important part of a power supply component in an electronic device. The electronic device herein refers to a computer device that may be used in a mobile environment and supports various communication standards such as global system for mobile communications (GSM), enhanced data rates for GSM evolution (EDGE), code division multiple access (CDMA), time division-synchronous code division multiple access (TD_SCDMA), wideband code division multiple access (WCDMA), time division duplexing-long term evolution (TDD_LTE), frequency division duplexing-long term evolution (FDD_LTE), and new radio (NR), and includes a mobile phone, a notebook computer, a tablet computer, an in-vehicle computer, and the like. In addition, the technical solutions provided in the present invention are also applicable to occasions of other radio frequency integrated circuit applications, such as a communications base station and an intelligent connected vehicle.

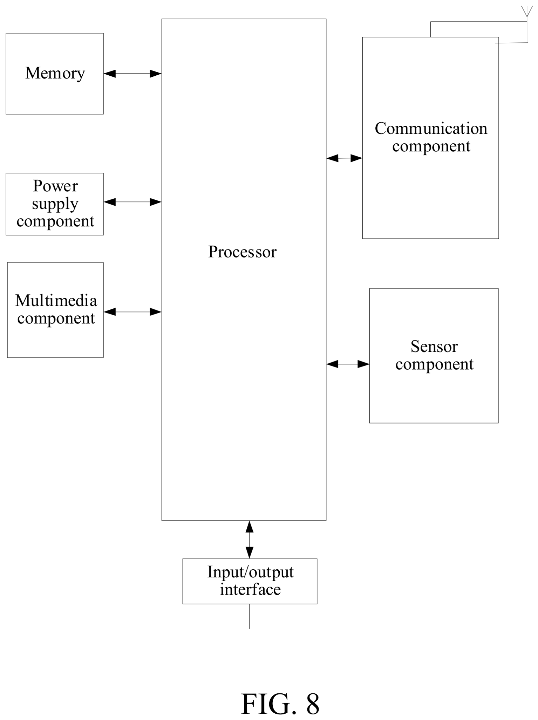

As shown in FIG. 8, the electronic device at least includes a processor, a memory, a communication component, and a power supply component, and may further include a sensor component, a multimedia component, an input/output interface, and the like based on an actual requirement. The memory, the communication component, the sensor component, the power supply component, the multimedia component, and the input/output interface are all connected to the processor. The memory may be a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, or the like. The processor may be a central processing unit (CPU), a graphics processing unit (GPU), a field programmable gate array (FPGA), an application-specific integrated circuit (ASIC), a digital signal processing (DSP) chip, or the like. Other components such as the sensor component and the multimedia component may be implemented by using general-purpose components, and will not be specifically described here.

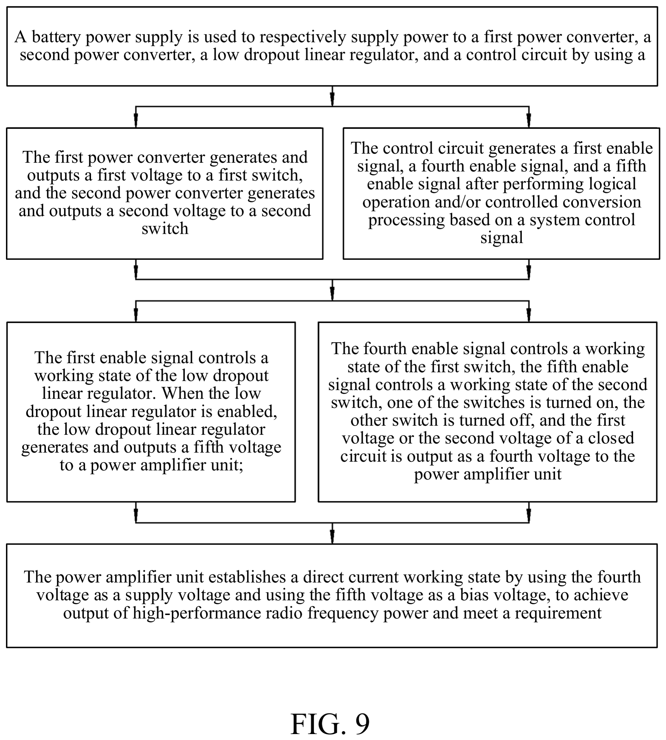

An embodiment of the present invention further provides a power supply method for a power amplifier module. A power supply system includes a battery power supply, a first power converter, a second power converter, a low dropout linear regulator, a first switch, a second switch, a control circuit, and a power amplifier unit. As shown in FIG. 9, a working process of the power supply method is as follows:
S1: The battery power supply is used to respectively supply power to the first power converter, the second power converter, the low dropout linear regulator, and the control circuit.
S2: The first power converter generates and outputs a first voltage to the first switch, and the second power converter generates and outputs a second voltage to the second switch.
S3: The control circuit generates a first enable signal, a fourth enable signal, and a fifth enable signal after performing logical operation and/or controlled conversion processing based on a system control signal.
S4: A working state of the low dropout linear regulator is controlled by using the first enable signal. When the low dropout linear regulator is enabled, the low dropout linear regulator generates and outputs a fifth voltage to a power amplifier unit.
S5: A working state of the first switch is controlled by using the fourth enable signal, and a working state of the second switch is controlled by using the fifth enable signal. One of the switches is turned on, and the other switch is turned off. The first voltage or the second voltage of a closed circuit is output as a fourth voltage to the power amplifier unit.
S6: The power amplifier unit establishes a direct current working state by using the fourth voltage as a supply voltage and using the fifth voltage as a bias voltage, so that the power amplifier module outputs high-performance radio frequency power to meet requirements on adaptability to an application solution.

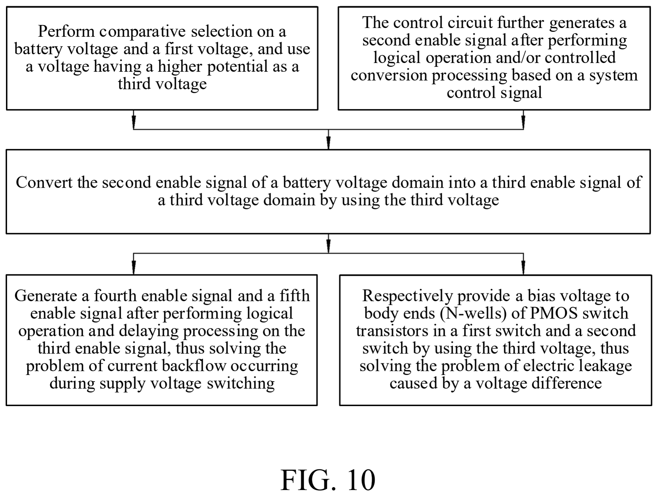

In the working process of the power supply method for the power amplifier module, step 2 (S2) and step 3 (S3) are performed at the same time, and step 4 (S4) and step 5 (S5) are also performed at the same time. In addition, as shown in FIG. 10, the control circuit further includes the following working steps:
S31: Perform comparative selection on the battery voltage and the first voltage, and use a voltage having a higher potential as a third voltage.
S32: Generate a second enable signal after performing the logical operation and/or controlled conversion processing based on the system control signal.
S33: Convert the second enable signal of a battery voltage domain into a third enable signal of a third voltage domain by using the third voltage.
S34: Generate the fourth enable signal and the fifth enable signal after performing logical operation and delaying processing on the third enable signal, thus solving a problem of current backflow occurring during supply voltage switching.
S35: Respectively provide the bias voltage to body ends (N-wells) of PMOS switch transistors in the first switch and the second switch by using the third voltage, thus solving a problem of electric leakage caused by a voltage difference.

When the third enable signal undergoes level state transition, a delay time interval exists between times at which the fourth enable signal and the fifth enable signal change undergo level state transition along with the level state transition.

Step 31 (S31) and step 32 (S32) are performed at the same time, and step 34 (S34) and step 35 (S35) are also performed at the same time.

Compared with the existing art, the power supply system for the power amplifier module that is provided by the present invention provides a power supply technical solution for the battery voltage VBAT having a potential difference, the first voltage VCC1 output by the first power converter, and the second voltage VCC2 output by the second power converter. The battery voltage VBAT is used as the main power, and the first voltage VCC1 and the second voltage VCC2 are respectively controlled by switching of the first switch and the second switch. One voltage is output as the fourth voltage VCC_OUT to the power amplifier unit, thus providing the supply voltage to the power amplifier unit. The fifth voltage output by the low dropout linear regulator provides the bias voltage to the power amplifier unit. The control circuit outputs the corresponding control signal after performing the logical operation and/or controlled conversion processing based on the inputted system control signal, to respectively control the working states of the first switch, the second switch, and the low dropout linear regulator. The fourth voltage VCC_OUT and the fifth voltage VBIAS jointly provide a direct current working state to the power amplifier unit, so that the power amplifier module outputs the high-performance radio frequency power to meet requirements on adaptability and cost performance of an application solution. In addition, by using the technical solutions of the logical control unit, the high-potential selection unit, the level conversion unit, and the current backflow prevention unit, the control circuit solves the problem of electric leakage caused by a voltage difference between different supply voltages, and the problem of current backflow and a ringing phenomenon that may occur during switching, while completing switching and control on the power supply system. Therefore, the power supply system for the power amplifier module that is provided in the present invention has beneficial effects such as an ingenious and proper structural design, flexibility, high working efficiency, and excellent circuit performance.

It should be noted that the plurality of unit embodiments are merely examples, and the technical solutions of different embodiments may be combined, all of which fall within the protection scope of the present invention.

In addition, the terms "first" and "second" are used for descriptive purposes only and are not to be construed as indicating or implying relative importance or to implicitly indicate the number of technical features indicated. From this, features defined as "first" and "second" may explicitly or implicitly include one or more features. In the description of the present invention, "plurality" means two or more, unless otherwise expressly and specifically defined.

The power supply system for the power amplifier module, the electronic device, and the power supply method that are provided in the present invention are described in detail above. For those of ordinary skill in the art, any obvious changes made to the present invention without deviating from its substantive content will constitute infringement of the patent rights of the present invention, and they will bear corresponding legal responsibilities.

## Claims

1. A power supply system for a power amplifier module, comprising a battery power supply and a power amplifier unit, and further comprising a first power converter, a second power converter, a low dropout linear regulator, a first switch, a second switch, and a control circuit, wherein
the battery power supply is used as a main power supply of the power supply system, and provides a supply voltage for the first power converter, the second power converter, the low dropout linear regulator, and the control circuit;
the first power converter uses a boost direct current power converter and is configured to: convert a battery voltage into a first voltage and output the first voltage to the first switch;
the second power converter uses a buck direct current power converter and is configured to: convert the battery voltage into a second voltage and output the second voltage to the second switch;
the control circuit outputs a control signal after performing logical operation and/or conversion processing based on a system control signal, to respectively control working states of the first switch, the second switch, and the low dropout linear regulator;
the first switch and the second switch respectively switch turning on or turning off working states of the switches based on the control signal, and output one of the first voltage and the second voltage as a fourth voltage to the power amplifier unit;
the low dropout linear regulator converts, based on the control signal, the battery voltage into a fifth voltage and then outputs the fifth voltage to the power amplifier unit; and
the power amplifier unit establishes a direct current working state by using the fourth voltage as a supply voltage and using the fifth voltage as a bias voltage, to output high-performance radio frequency power.

2. The power supply system for the power amplifier module according to claim 1, wherein
an output end of the battery power supply is respectively connected to power input ends of the first power converter, the second power converter, the low dropout linear regulator, and the control circuit; and an output end of the first power converter is connected to a power input end of the first switch; an output end of the second power converter is connected to a power input end of the second switch; and output ends of both the first switch and the second switch are jointly connected to a supply voltage input end of the power amplifier unit after being connected to each other; an output end of the low dropout linear regulator is connected to a bias voltage input end of the power amplifier unit; and a control signal output end of the control circuit is respectively connected to control signal input ends of the low dropout linear regulator, the first switch, and the second switch.

3. The power supply system for the power amplifier module according to claim 1, wherein
the power amplifier unit comprises at least one power amplifier; each power amplifier connects the inputted fourth voltage as the supply voltage to a collector of a corresponding heterojunction bipolar transistor and connects the inputted fifth voltage as the bias voltage to a base of the corresponding heterojunction bipolar transistor, to establish a direct current working state of the power amplifier.

4. The power supply system for the power amplifier module according to claim 1, wherein
a circuit structure of the first switch and a circuit structure of the second switch are the same, and output ends of the first switch and the second switch are connected to each other; the first voltage is input to a power end of the first switch, and a fourth enable signal is input to a control end; the second voltage is input to a power end of the second switch, and a fifth enable signal is input to a control end; the fourth enable signal and the fifth enable signal respectively control one of the first switch and the second switch to be turned on and control the other one of the first switch and the second switch to be turned off; and an input voltage of a closed circuit is output as a fourth voltage.

5. The power supply system for the power amplifier module according to claim 1, wherein
the first switch comprises a fifth N-channel metal oxide semiconductor (NMOS) transistor, a fifth P-channel metal oxide semiconductor (PMOS) transistor, a first resistor, a second resistor, and an eighth inverter;
a gate end of the fifth NMOS transistor is connected to a first output end of a current backflow prevention unit in the control circuit through the first resistor; a gate end of the fifth PMOS transistor is connected to an output end of the eighth inverter through the second resistor; an input end of the eighth inverter is connected to the first output end of the current backflow prevention unit in the control circuit; a power end of the eighth inverter is connected to an output end of a high-potential selection unit in the control circuit; a drain end of the fifth NMOS transistor and a source end of the fifth PMOS transistor are jointly connected to an output end of the first power converter after being connected to each other; a source end of the fifth NMOS transistor and a drain end of the fifth PMOS transistor are jointly connected to an output end of the first switch after being connected to each other; a body end of the fifth NMOS transistor is connected to a ground potential end; and a body end of the fifth PMOS transistor is connected to the output end of the high-potential selection unit in the control circuit.

6. The power supply system for the power amplifier module according to claim 1, wherein
the control circuit comprises a logical control unit, a high-potential selection unit, a level conversion unit, and a current backflow prevention unit;
the logical control unit is composed of a logical combination of gate circuits, and is configured to: after performing the logical operation processing based on the system control signal, generate a first enable signal to control a working state of the low dropout linear regulator, and generate a second enable signal and output the second enable signal to the level conversion unit;
the high-potential selection unit is configured to: perform comparative selection on the battery voltage and the first voltage, and output a voltage having a higher potential as a third voltage to the level conversion unit, the current backflow prevention unit, the first switch, and the second switch;
the level conversion unit is configured to: convert the second enable signal of a battery voltage domain into a third enable signal of a third voltage domain, and output the third enable signal to the current backflow prevention unit; and
the current backflow prevention unit is configured to: generate, after performing logical operation and delaying processing based on the third enable signal, the fourth enable signal and the fifth enable signal of the third voltage domain to respectively control the working states of the first switch and the second switch.

7. The power supply system for the power amplifier module according to claim 6, wherein
for the logical control unit, a control signal input end is connected to a system control signal input end; a power input end is connected to an output end of the battery power supply; a first output end is connected to a control signal input end of the low dropout linear regulator; a second output end is connected to a control signal input end of the level conversion unit;
for the high-potential selection unit, an input end is respectively connected to the output end of the battery power supply and an output end of the first power converter, and an output end is respectively connected to the current backflow prevention unit, the level conversion unit, the first switch, and the second switch;
for the level conversion unit, the control signal input end is connected to a second output end of the logical control unit; a power input end is connected to an output end of the high-potential selection unit; an output end is connected to a control signal input end of the current backflow prevention unit;
for the current backflow prevention unit, the control signal input end is connected to an output end of the level conversion unit; a power input end is connected to an output end of the high-potential selection unit; a first output end is connected to a control signal input end of the first switch; and a second output end is connected to a control signal input end of the second switch.

8. The power supply system for the power amplifier module according to claim 6, wherein
the high-potential selection unit comprises a first PMOS transistor, a second PMOS transistor, a first Schottky diode, and a second Schottky diode;
a source end of the first PMOS transistor is connected to an output end of the battery power supply; a gate end of the first PMOS transistor is connected to an output end of the first power converter; a source end of the second PMOS transistor is connected to the output end of the first power converter; a gate end of the second PMOS transistor is connected to the output end of the battery power supply; a body end of the first PMOS transistor is short-circuited to a drain end, and a body end of the second PMOS transistor is short-circuited to a drain end; the two body ends are jointly connected to an output end of the high-potential selection unit; a positive electrode of the first Schottky diode is connected to the source end of the first PMOS transistor; a positive electrode of the second Schottky diode is connected to the source end of the second PMOS transistor; and negative electrodes of both the first Schottky diode and the second Schottky diode are connected to the output end of the high-potential selection unit.

9. The power supply system for the power amplifier module according to claim 8, wherein
when the battery voltage is greater than the first voltage and a difference between the battery voltage and the first voltage is greater than or equal to a threshold voltage of the first PMOS transistor, the first PMOS transistor is turned on, and the battery voltage is output to the output end of the high-potential selection unit through the first PMOS transistor;
when the battery voltage is greater than the first voltage and a difference between the battery voltage and the first voltage is less than the threshold voltage of the first PMOS transistor, the first Schottky diode is turned on, and the battery voltage is output to the output end of the high-potential selection unit through the first Schottky diode; and
the third voltage output by the high-potential selection unit is the battery voltage.

10. The power supply system for the power amplifier module according to claim 8, wherein
when the first voltage is greater than the battery voltage and a difference between the first voltage and the battery voltage is greater than or equal to a threshold voltage of the second PMOS transistor, the second PMOS transistor is turned on, and the first voltage is output to the output end of the high-potential selection unit through the second PMOS transistor;
when the first voltage is greater than the battery voltage and a difference between the first voltage and the battery voltage is less than the threshold voltage of the second PMOS transistor, the second Schottky diode is turned on, and the first voltage is output to the output end of the high-potential selection unit through the second Schottky diode; and
the third voltage output by the high-potential selection unit is the first voltage.

11. The power supply system for the power amplifier module according to claim 8, wherein
when the battery voltage is equal to the first voltage, both the first Schottky diode and the second Schottky diode are turned on, and the first voltage and the battery voltage are respectively output to the output end of the high-potential selection unit through the first Schottky diode and the second Schottky diode; and the third voltage output by the high-potential selection unit is the same as both the first voltage and the battery voltage.

12. The power supply system for the power amplifier module according to claim 6, wherein
the level conversion unit comprises a third PMOS transistor, a fourth PMOS transistor, a third NMOS transistor, and a fourth NMOS transistor;
the third PMOS transistor and the third NMOS transistor form a first-stage inverter, and the fourth PMOS transistor and the fourth NMOS transistor form a second-stage inverter; and the first-stage inverter and the second-stage inverter are cascaded in sequence.

13. The power supply system for the power amplifier module according to claim 12, wherein
a gate end of the third PMOS transistor and a gate end of the third NMOS transistor are connected as an input end of the level conversion unit to a second output end of the logical control unit after being connected to each other; a source end of the third PMOS transistor is short-circuited to a body end, and a source end of the fourth PMOS transistor is short-circuited to a body end; the two source ends are connected to the output end of the high-potential selection unit; a source end of the third NMOS transistor is short-circuited to a body end, and a source end of the fourth NMOS transistor is short-circuited to a body end; the two source ends are connected to a ground potential end; and a drain end of the fourth PMOS transistor and a drain end of the fourth NMOS transistor are jointly connected to the output end of the level conversion unit after being connected to each other.

14. The power supply system for the power amplifier module according to claim 12, wherein
the level conversion unit uses the third voltage as the supply voltage; and a voltage domain of the inputted second enable signal and a voltage domain of the output third enable signal are different, but logical states of the second enable signal and the third enable signal are the same.

15. The power supply system for the power amplifier module according to claim 6, wherein
the current backflow prevention unit comprises a first inverter, a first NAND gate, a second NAND gate, a first delay module, and a second delay module, as well as a first inverter group and a second inverter group;
each of the first inverter group and the second inverter group is formed by connecting the same odd number of inverters in series in sequence; and
power ends of all elements are connected to an output end of the high-potential selection unit.

16. The power supply system for the power amplifier module according to claim 15, wherein
in the current backflow prevention unit, an input end of the first inverter and a first input end of the first NAND gate are both connected to an output end of the level conversion unit; an output end of the first inverter is connected to a first input end of the second NAND gate; an output end of the first NAND gate is connected to an input end of the first delay module; an output end of the first delay module is connected to both a second input end of the second NAND gate and an input end of the first inverter group; an output end of the first inverter group is connected to a first output end of the current backflow prevention unit; an output end of the second NAND gate is connected to an input end of the second delay module; an output end of the second delay module is connected to both a second input end of the first NAND gate and an input end of the second inverter group; and an output end of the second inverter group is connected to a second output end of the current backflow prevention unit.

17. The power supply system for the power amplifier module according to claim 15, wherein
in the current backflow prevention unit, when the inputted third enable signal undergoes level state transition, the output fourth enable signal and the output fifth enable signal change undergo level state transition along with the level state transition, and a delay time interval exists between times of the level state transitions of the fourth enable signal and the fifth enable signal.

18. An electronic device, comprising a power supply system comprising the power amplifier module according to any one of claims 1 to 17.

19. A power supply method for a power amplifier module, comprising the following steps:
respectively supplying power to a first power converter, a second power converter, a low dropout linear regulator, and a control circuit by using a battery power supply;
generating and outputting, by the first power converter, a first voltage to a first switch, and generating and outputting, by the second power converter, a second voltage to a second switch;
generating, by the control circuit, a first enable signal, a fourth enable signal, and a fifth enable signal after performing logical operation and/or controlled conversion processing based on a system control signal;
controlling a working state of the low dropout linear regulator by using the first enable signal; when the low dropout linear regulator is enabled, generating and outputting a fifth voltage to a power amplifier unit by the low dropout linear regulator;
controlling a working state of the first switch by using the fourth enable signal, controlling a working state of the second switch by using the fifth enable signal, turning on one of the switches, turning off the other switch, and outputting the first voltage or the second voltage of a closed circuit as a fourth voltage to the power amplifier unit; and
establishing, by the power amplifier unit, a direct current working state by using the fourth voltage as a supply voltage and using the fifth voltage as a bias voltage, to achieve output of high-performance radio frequency power.

20. The power supply method for the power amplifier module according to claim 19, further comprising the following steps:
performing, by the control circuit, comparative selection on the battery voltage and the first voltage, and using a voltage having a higher potential as a third voltage;
further generating, by the control circuit, a second enable signal after performing the logical operation and/or controlled conversion processing based on the system control signal;
converting the second enable signal of a battery voltage domain into a third enable signal of a third voltage domain by using the third voltage;
generating the fourth enable signal and the fifth enable signal after performing logical operation and delaying processing on the third enable signal; and
respectively providing the bias voltage to body ends of PMOS switch transistors in the first switch and the second switch by using the third voltage.

21. The power supply method for the power amplifier module according to claim 20,
wherein
when the third enable signal undergoes level state transition, a delay time interval exists between times at which the fourth enable signal and the fifth enable signal change undergo level state transition along with the level state transition.
